Europäisches Patentamt

European Patent Office

Office européen des brevets

(19)

(11) **EP 1 304 501 A2**

(12) # EUROPEAN PATENT APPLICATION

(43) Date of publication:
**23.04.2003 Bulletin 2003/17**

(51) Int Cl.⁷: **F16G 5/16**

(21) Application number: **02023203.9**

(22) Date of filing: **16.10.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **19.10.2001 JP 2001321721**

(71) Applicant: **BANDO CHEMICAL INDUSTRIES, LTD.
Kobe-shi, Hyogo 652-0883 (JP)**

(72) Inventors:
• **Sakanaka, Hiroyuki**
  **Hyogo-ku, Kobe-shi, Hyogo 652-0883 (JP)**
• **Nonaka, Keizo**
  **Hyogo-ku, Kobe-shi, Hyogo 652-0883 (JP)**

(74) Representative: **Zinnecker, Armin, Dipl.-Ing. et al
Lorenz-Seidler-Gossel,
Widenmayerstrasse 23
80538 München (DE)**

(54) **Belt continuously variable transmission**

(57)    In a belt continuously variable transmission constructed such that a block-type belt **5** in which a plurality of blocks **7**, **7** are fixedly engaged with a pair of tension members **6**, **6** is wound between driving and driven pulleys **3** and **4** of variable diameter each having a V-section pulley groove with a predetermined wedge angle $\alpha$, even if oil mist adheres to the surfaces of the pulley grooves **3c**, **4c** and contact surfaces **7a** of the blocks **7**, its transmission power is prevented from being reduced. This can be attained by setting the wedge angle $\alpha$ at a value equal to or less than 20° . By increasing the apparent friction coefficient $\mu'$ between each pulley **3**, **4** and each block of the belt **5**, the transmission can retain a high transmission power, and concurrently the friction coefficient $\mu$ between each pulley **3**, **4** and each block **7** can be reduced to the level to which the friction coefficient $\mu$ is decreased due to oil-mist adhesion.

FIG. 3

EP 1 304 501 A2

**Description**

BACKGROUND OF THE INVENTION

(a) Field of the invention

The present invention relates to belt continuously variable transmissions employed as automobile transmissions, for example. More specifically, the present invention relates to measures to prevent reduction in transmission power thereof resulting from the decrease in the friction coefficient between a pulley and a block of a belt due to the adhesion of foreign substances such as oil.

(b) Description of the Prior Art

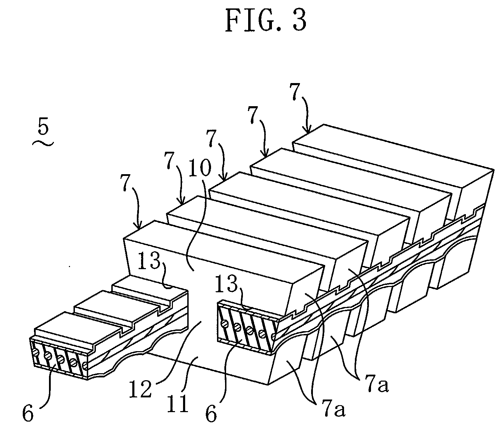

As an example of conventional belt continuously variable transmissions, that disclosed in Japanese Unexamined Patent Publication No. 5-196093 is known. The conventional belt continuously variable transmission comprises a pair of pulleys, each having a V-section pulley groove with a predetermined wedge angle and being variable in pulley diameter, and is constructed such that a heavy-duty power transmission V-belt is wound between the pulleys. As shown in FIG. **3**, in the heavy-duty power transmission V-belt **5,** a plurality of blocks **7**, **7**, ... are fixedly engaged with tension members **6, 6** disposed to extend longitudinally of the belt.

The belt continuously variable transmission disclosed in the above publication resolves problems due to a high friction coefficient $\mu$ between the pulley and the belt, such as noises produced by belt travel, by reducing the friction coefficient $\mu$ to a value satisfying $\mu \leqq 0.23$ (typically, $\mu \geqq 0.3$) where the pulley groove has a wedge angle $\alpha$ of $26°$. Furthermore, the friction coefficient $\mu$ is set at $\mu \geqq 0.16$, preferably $\mu \geqq 0.19$, whereby the transmission can obtain a high transmission power **ST** (**ST**=2000 through 3000 kgf $\approx$ 20000 through 30000 N/m).

The conventional belt continuously variable transmission, however, has a drawback as follows: Even though the friction coefficient $\mu$ between the pulley and the block of the belt is relatively low, it may be reduced further (for example, to $\mu = 0.13$) when foreign substances such as oil mist adhere to the surface of the pulley groove or the block. Thus, the transmission power is reduced.

As a measure to resolve the drawback, it is conceivable that the friction coefficient is set at a small value in advance so that, even after foreign substances have adhered to the pulley groove or the block, it may not be reduced less than a value set where the foreign substances had not yet adhered thereto.

However, just employing the reduced friction coefficient cannot attain a transmission having a high transmission power.

It is therefore an object of the present invention to provide a belt continuously variable transmission in which a heavy-duty power transmission V-belt is wound between a pair of pulleys each having a V-section pulley groove with a predetermined wedge angle and which is capable of reducing the friction coefficient between the pulleys and blocks of the belt without reducing a high transmission power, and therefore capable of avoiding a substantial reduction in transmission power due to the adhesion of foreign substances.

SUMMARY OF THE INVENTION

To attain the above object, the present invention is made in view of the knowledge that the direct factor determining transmission power is "an apparent friction coefficient", which is fixed based on the wedge angle of a pulley groove and the friction coefficient between a pulley and a block of a belt and which is bigger as the wedge angle is smaller. In the present invention, the wedge angle $\alpha$ is suppressed to 20° or smaller to increase "the apparent friction coefficient", thereby making it possible to attain a high transmission power and concurrently reduce the friction coefficient. As a result, it can be avoided to reduce transmission power due to the adhesion of foreign substances.

Specifically, the present invention is directed to a belt continuously variable transmission comprising: a pair of pulleys which each have a V-section pulley groove with a predetermined wedge angle and of which pulley diameters are variable; and a heavy-duty power transmission V-belt which is wound between the pair of pulleys. The heavy-duty power transmission V-belt includes at least one pair of tension members disposed to extend longitudinally of the belt, and a plurality of blocks fixedly engaged with the tension members to align longitudinally of the belt and each having both side surfaces widthwise of the belt, the side surfaces of each said block serving as contact portions contactable with corresponding surfaces of the pulley groove of each said pulley. In the belt continuously variable transmission, the wedge angle $\alpha$ of the pulley groove of each said pulley satisfies $\alpha \leqq 20°$.

With this construction, in the belt continuously variable transmission in which the heavy-duty power transmission V-belt is wound between the pair of pulleys and the contact portions of each block of the belt are allowed to contact the corresponding surfaces of the pulley groove of each pulley, the magnitude of friction force between the pulley and the belt directly depends not upon the friction coefficient μ between the pulley and the block (the friction coefficient in the perpendicular direction of the contact surfaces (working flanks) between the pulley and the block) but upon the apparent friction coefficient μ' between the pulley and the block (the friction coefficient in the perpendicular direction of the contact surfaces (working flanks) between the pulley and the belt where the pulley and the belt are assumed to be a flat pulley and a flat belt, respectively, in other words, the friction coefficient in the radial direction of the pulley).

The apparent friction coefficient μ' is fixed by the friction coefficient μ between the pulley and the block and the wedge angle α of the pulley groove. The relation among the apparent friction coefficient μ', the friction coefficient μ and the wedge angle α satisfies the following Equation (1):

$$\mu' = \mu/\sin(\alpha/2) \tag{1}$$

where $\alpha \leqq 20°$, and the wedge angle α is smaller than that of the pulley groove in the conventional example (for example, $\alpha = 26°$). Therefore, with the apparent friction coefficient μ' retained, that is, with the transmission power retained, the friction coefficient μ can be reduced. As a result, reduction in the transmission power due to the adhesion of foreign substances can be avoided. In this regard, in the case of $\alpha = 20°$, the rate of reduction in the transmission power is "0", which is obtained from experiments. On the other hand, in the case of $\alpha > 20°$, the transmission power is reduced substantially (to about 85% from experiments) due to the adhesion of foreign substances.

The wedge angle α preferably satisfies $\alpha \geqq 15°$. That is to say, the apparent friction coefficient, directly determining the transmission power between the pulley and the belt, is higher as the wedge angle is decreased. Simultaneously, according to the increase in the apparent friction coefficient, the lateral pressure from the pulley against the block also increases. If the lateral pressure increases too much, the block would be broken. In this construction, however, the wedge angle α satisfies $\alpha \geqq 15°$, whereby such block breakage can be prevented.

At least the contact portions of each said block which are contactable with the corresponding surfaces of the pulley groove are preferably formed of a phenolic resin material. Further, the surfaces of the pulley groove of each said pulley are preferably covered with an electrolessly plated nickel film.

According to this construction, the contact portions of the belt block are formed of a phenolic resin material while the surfaces of the pulley groove of each said pulley are covered with an electrolessly plated nickel film. Therefore, as compared with the case where the plated film is not covered, the friction coefficient between the pulley and the block is reduced further. As a result, a specific and proper reduction in the friction coefficient can be made.

In such construction as described above, the phenolic resin material preferably contains carbon fiber. Since the phenolic resin material of which the contact portion is formed contains carbon fiber, the friction coefficient between the pulley and the block can be reduced by increasing the carbon-fiber content of the resin material. Accordingly, the carbon fiber acts as means for decreasing the friction coefficient between the pulley and the block.

The electrolessly plated nickel film preferably contains fluoroplastic particles. Since the electrolessly plated nickel film on the surfaces of the pulley groove contains the fluoroplastic particles, the friction coefficient between the pulley and the block can be reduced by increasing the content of the fluoroplastic particles. Accordingly, the fluoroplastic particles act as means for decreasing the friction coefficient between the pulley and the block.

BRIEF DESCRIPTION OF THE DRAWINGS

FIG. **1** is a plan view schematically illustrating the whole structure of a belt continuously variable transmission according to an embodiment of the present invention.

FIG. **2** is a side view schematically illustrating the whole structure of the belt continuously variable transmission.

FIG. **3** is a perspective view schematically illustrating the structure of a block-type belt.

FIG. **4** is a plan view schematically illustrating the structure of a block.

FIG. **5** is a graph illustrating how a wedge angle acts on an apparent friction coefficient.

FIG. **6** is a graph illustrating how the wedge angle acts on a force with which a pulley pushes a block.

DESCRIPTION OF THE PREFERRED EMBODIMENT

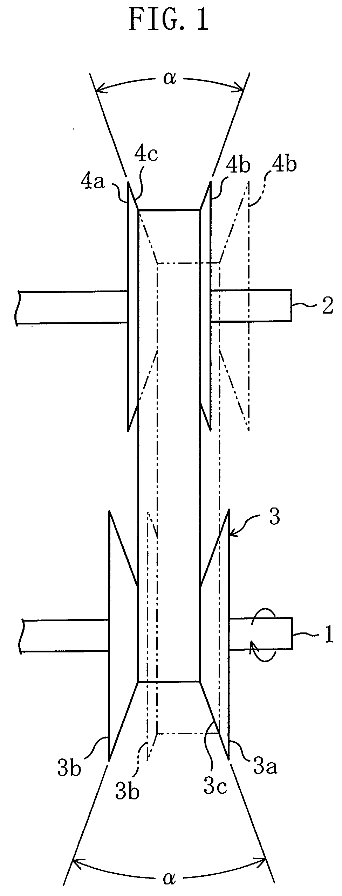

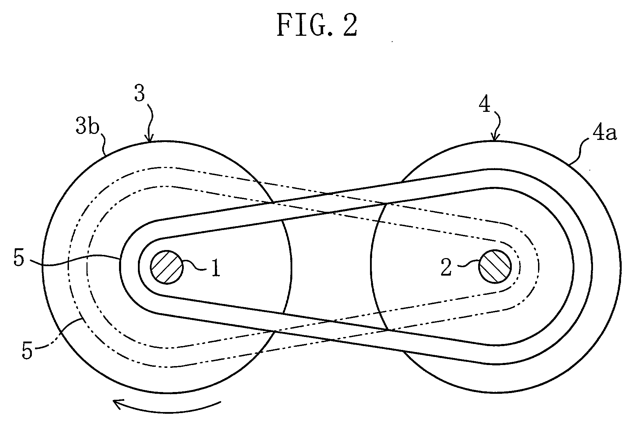

Hereinafter, an embodiment of the present invention will be described with reference to the accompanying drawings. FIGS. **1** and **2** illustrate the whole structure of a belt continuously variable transmission according to the embodiment of the invention. This belt continuously variable transmission is disposed on a torque transmission path between driving and traveling units of a vehicle (both are not shown). It is employed in order to transmit torque produced by the driving unit to the traveling unit and concurrently to change the speed ratio therebetween.

The belt continuously variable transmission comprises a driving shaft **1** and a driven shaft **2**. The driving shaft **1** is drivingly connected to the driving unit. The driven shaft **2** is disposed in parallel to the driving shaft **1** and connected to the traveling unit. The driving and driven shafts **1** and **2** are provided with driving and driven pulleys **3** and **4**, respectively.

The driving pulley **3** is made up of a stationary sheave **3a** and a movable sheave **3b**. The stationary sheave **3a** is provided unmovably in the shaft direction of the driving pulley **3** (the lateral direction of FIG. **1**), while the movable sheave **3b** is provided movably in the shaft direction thereof. Between the stationary and movable sheaves **3a** and **3b**, a V-section pulley groove **3c** with a predetermined wedge angle $\alpha$ is formed. When the movable sheave **3b** is moved close to the stationary sheave **3a** (in the right direction of FIG. **1**), the pulley diameter increases. On the other hand, when the movable sheave **3b** is moved away from the stationary sheave **3a** (in the left direction of FIG. **1**), the pulley diameter decreases.

Like the driving pulley **3**, the driven pulley **4** is also made up of a stationary sheave **4a** and a movable sheave **4b**. The stationary sheave **4a** is provided unmovably in the shaft direction of the driven pulley **4**, while the movable sheave **4b** is provided movably in the shaft direction thereof. Between the stationary and movable sheaves **4a** and **4b**, a V-section pulley groove **4c** with the same wedge angle $\alpha$ as that of the driving pulley **3** is formed. When the movable sheave **4b** is moved close to the stationary sheave **4a** (in the left direction of FIG. **1**), the pulley diameter increases. On the other hand, when the movable sheave **4b** is moved away from the stationary sheave **4a** (in the right direction of FIG. **1**), the pulley diameter decreases. However, the stationary sheave **4a** and the movable sheave **4b** of the driven pulley **4** have a reverse arrangement in the shaft direction to the stationary sheave **3a** and the movable sheave **3b** of the driving pulley **3**.

Between the driving and driven pulleys **3** and **4**, a block-type belt **5** as a heavy-duty power transmission V-belt is wound. As shown in FIG. **3,** the block-type belt **5** is made up of a pair of tension members **6, 6** and a plurality of blocks **7, 7,** .... The pair of tension members **6, 6** are disposed to arange widthwise of the belt (in the lateral direction of FIG. **3**). The blocks **7, 7,** ... are disposed at regular intervals longitudinally of the belt and fixedly engaged with both the tension members **6, 6**.

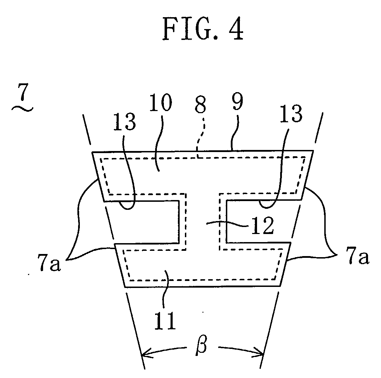

As shown in FIG. **4**, each of the blocks **7** is made up of an upper beam **10**, a lower beam **11** and a pillar **12**. The upper beam **10** is disposed to extend widthwise of the belt (in the lateral direction of FIG. **4**). The lower beam **11** is disposed closer to the belt bottom face than the upper beam **10** (on the lower side of FIG. **4**) to extend widthwise of the belt. The pillar **12** is disposed between the upper and lower beams **10** and **11** to extend thicknesswise of the belt (in the vertical direction of FIG. **4**) and connects the upper and lower beams **10** and **11** in the middle of the belt width.

In this construction, in both side portions of each block **7** at respective belt widthwise ends, fitting concavities **13, 13** each in a slit-like shape opened laterally of the belt are defined by the upper and lower beams **10** and **11** and the pillar **12**. Each of the tension members **6** is fitted into the corresponding fitting concavity **13**, whereby each of the blocks **7** is fixedly engaged with the tension members **6, 6**.

Both side surfaces of each block **7** widthwise of the belt, that is, both end surfaces of the upper and lower beams **10** and **11**, serve as contact surfaces **7a, 7a** (also referred to as contact portions in the present invention) which contact the corresponding surfaces of the pulley grooves **3c, 4c** of the pulleys **3, 4.** The angle $\beta$ between both the contact surfaces **7a, 7a** is set at the same angle as the wedge angle $\alpha$ of the pulley grooves **3c, 4c** ($\beta=\alpha$).

Each of the blocks **7** is made of a phenolic resin material **9** and a reinforcing material **8** of aluminium alloy embedded within the phenolic resin material **9**.

In this embodiment, the wedge angle $\alpha$ of the pulley grooves **3c, 4c** satisfies the following condition:

$$15° \leqq \alpha \leqq 20°$$

Further, the friction coefficient $\mu$ between the surfaces of the pulley grooves **3c, 4c** and the contact surfaces **7a, 7a** of the block **7** is set to satisfy the following Equation (2):

$$0.8 \times \tan(\alpha/2) \leqq \mu \leqq \tan(\alpha/2) \tag{2}$$

and is basically set at a lower value than the conventional example.

Specifically, the phenolic resin material **9** as a main material of the blocks **7** contains carbon fiber. On the other hand, the surfaces of the pulley grooves **3c, 4c** are covered with an electrolessly plated nickel film which contains fluoroplastic particles in a dispersed state. Therefore, due to the presence of the carbon fiber and fluoroplastic particles, the friction coefficient $\mu$ between each pulley **3, 4** and each block **7** is set at a reduced value.

Now, description will be made of experiments which aims at determining transmittablilty and durability of the belt continuously variable transmission of the above construction.

In these experiments, seven transmissions of different wedge angles $\alpha$ (No. **1** through No. **7**) were used.

As shown in Table **1** below, the wedge angles $\alpha$ of Nos. **1** through **7** are 14° , 15° ,17° ,20° ,21° ,23° , and 26° , respectively.

Likewise, the friction coefficients $\mu$ between the pulley **3, 4** and the block **7** in the respective transmissions were 0.11, 0.12, 0.14, 0.16, 0.18, 0.19, and 0.21, which were obtained from actual measurements. Note that all the friction coefficients $\mu$ satisfy the above Equation (2).

[Table 1]

| | Wedge angle $\alpha$ | Friction coefficient $\mu$ | Transmission power (in slip rate of 2%) | | Transmittability | Time to Breakage | Durability |
|---|---|---|---|---|---|---|---|
| | | | Before oil adhesion | After oil adhesion | | | |
| No. 1 | 14 | 0.11 | 25500 | 26000 | OK | 150hr | NG |
| No. 2 | 15 | 0.12 | 25500 | 26000 | OK | $\geqq$200hr | OK |
| No. 3 | 17 | 0.14 | 25500 | 26000 | OK | $\geqq$200hr | OK |
| No. 4 | 20 | 0.16 | 25500 | 25500 | OK | $\geqq$200hr | OK |
| No. 5 | 21 | 0.18 | 26000 | 23000 | NG | $\geqq$200hr | OK |
| No. 6 | 23 | 0.19 | 26000 | 22000 | NG | $\geqq$200hr | OK |
| No. 7 | 26 | 0.21 | 26000 | 20000 | NG | $\geqq$200hr | OK |

- Transmittability Evaluation -

This experiment is to evaluate the transmission powers **ST** (in N/m) of the transmissions by measuring torque of the driven pulley **4** with torque of the driving pulley **3** kept constant. In this evaluation, the center distance between the driving shaft **1** and the driven shaft **2** was fixed at 148.5 mm and the pulley diameter of the driving pulley **3** was fixed at 67.5 mm. With thrust (4629 N) in the direction to which the movable sheave **4b** of the driven pulley **4** pushes the belt **5** applied to the movable sheave **4b**, the driving pulley **3** was rotatably driven with 72.5 N · m of torque so that its rotational speed would be 3020 rpm. Then, the torque of the driving pulley **3** was transmitted to the driven pulley **4** by way of the belt **5**. It is to be noted that the pulley diameter of the driven pulley **4** in this construction was 129.0 mm in a steady driving state.

Under such condition, the respective transmission powers of the transmissions before and after oil adhesion were evaluated where the slip rate of each transmission is 2%. "OK" evaluation was given to the transmission in which the transmission power after oil adhesion was kept at the same value as that before oil adhesion. On the other hand, "NG" evaluation was given to the transmission in which the transmission power was not kept but reduced. The results are shown in Table 1 described above.

- Durability evaluation under low-speed and heavy-duty condition -

This experiment is to evaluate the durabilities of the transmissions by measuring torque-transmission time (in hr) when the driving pulley **3** is rotated at low speed with heavy duty applied to the driven pulley **4**. In this evaluation, the pulley diameter of the driving pulley **3** was fixed at 67.52 mm and the pulley diameter of the driven pulley **4** was at 128.96 mm. With 3400 N of duty applied to the driven pulley **4**, the driving pulley **3** was rotatably driven with 68.9 N · m of torque so that its rotational speed would be 2600 rpm. Then, the torque of the driving pulley **3** was transmitted to the driven pulley **4** by way of the belt **5**.

Under such condition, "OK" evaluation was given to the transmission in which the torque transmitting was done for 200 hours. On the other hand, "NG" evaluation was given to the transmission in which the torque-transmission time did not reach 200 hours. The results are shown in Table **1** described above.

As can be seen from Table **1**, first as for trasmittability, all the transmission powers **ST** satisfied **ST** $\geqq$ 20000 N/m, which were higher than the conventional one. The retention rates of No. **1** through No.**4** were 100% or more, which were determined as "OK". On the other hand, the retention rates of No. **5** through No. **7** were 88.5% (=23000/26000), 84.6 % (=22000/26000), 76.9 % (=20000/26000), respectively. These were determined as "NG". This proves that the condition of the wedge angle $\alpha$ capable of satisfying the transmittability is $\alpha \leqq 20°$.

Next, as for durability, the durabilities of No. **2** through No.**7** were "OK". However, the durability of No.**1** was "NG", because its block **7** was broken at the time when 150 hours passed. This proves that the condition of the wedge

angle $\alpha$ capable of satisfying the durability is $\alpha \geqq 15°$ .

Consequently, by setting the wedge angle $\alpha$ of the pulley grooves **3c, 4c** of the pulleys **3, 4** at $15° \leqq \alpha \leqq 20°$, then a high transmission power can be retained while the friction coefficient $\mu$ can be decreased. This avoids reduction in the transmission power resulting from the decrease in the friction coefficient $\mu$ due to oil adhesion, and also prevents the durability from being decreased due to an excessive transmission power.

Based on the relationship between the wedge angle and variation in the apparent friction coefficient before and after oil adhesion and the relationship between the wedge angle and the force applied to each block of the belt, consideration will be made of the relationship between the wedge angle and transmittability, and the relationship between the wedge angle and durability.

- Relationship between wedge angle and apparent friction coefficient -

The apparent friction coefficient $\mu'$ before oil adhesion with a predetermined wedge angle $\alpha$ is obtained by the foregoing Equation (1), according to the reference friction coefficient $\mu$ (= $\mu_c \times 0.9$) obtained by multiplying the coefficient of friction for block-engaging limit $\mu_c$ between each block **7** and each pulley **3, 4** by a constant (herein, 0.9).

The apparent friction coefficient $\mu'_o$ after oil adhesion is obtained from the following Equation (3) according to the friction coefficient $\mu_o$ after oil adhesion:

$$\mu'_o = \mu_o / \sin(\alpha/2) \qquad (3)$$

Therefore, the retention rate for the apparent friction coefficient $\mu'_o$ after oil adhesion with respect to the apparent friction coefficient $\mu'$ before oil adhesion is obtained from the following Equation (4):

$$\text{Retention rate} = \mu'_o / \mu' \qquad (4)$$

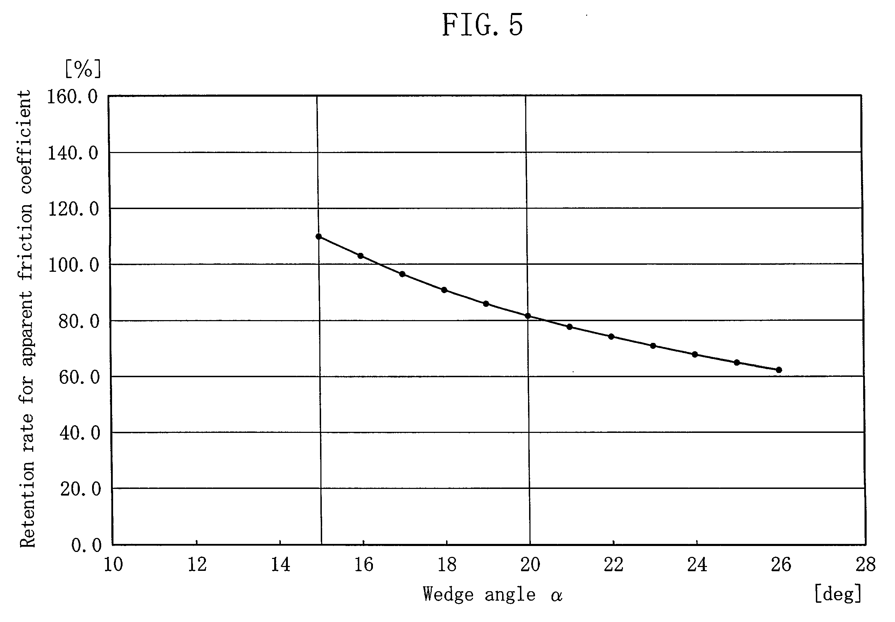

Herein, Table **2** shows the respective retention rates where the wedge angles $\alpha$ range from $14°$ to $26°$ (in increments of $1°$ ) on the assumption that the friction coefficient $\mu_o$ after oil adhesion is 0.13. Furthermore, FIG. **5** shows the relationship between the wedge angle $\alpha$ and the retention rate.

[Table 2]

| Wedge angle $\alpha$ | Coefficient of friction $\mu_c$ for block-engaging limit | Friction coefficient $\mu$ | Apparent friction coefficient $\mu'$ | Friction coefficient after oil adhesion $\mu_o$ | Apparent friction coefficient after oil adhesion $\mu'_o$ | Retention rate | Force with which pulley pushes belt |
|---|---|---|---|---|---|---|---|
| 14 | 0.122722 | 0.110 | 0.907 | 0.13 | 1.067 | 117.7 | 206.8 |
| 15 | 0.131585 | 0.118 | 0.908 | ↑ | 0.996 | 109.8 | 193.3 |
| 16 | 0.140469 | 0.126 | 0.909 | ↑ | 0.935 | 102.8 | 181.5 |
| 17 | 0.149374 | 0.34 | 0.910 | ↑ | 0.880 | 96.7 | 171.1 |
| 18 | 0.158303 | 0.142 | 0.911 | ↑ | 0.831 | 91.2 | 161.9 |
| 19 | 0.167256 | 0.151 | 0.913 | ↑ | 0.788 | 86.4 | 153.7 |
| 20 | 0.176236 | 0.159 | 0.914 | ↑ | 0.749 | 82.0 | 146.3 |
| 21 | 0.185243 | 0.167 | 0.915 | ↑ | 0.714 | 78.0 | 139.6 |
| 22 | 0.194279 | 0.175 | 0.917 | ↑ | 0.682 | 74.3 | 133.5 |
| 23 | 0.203346 | 0.183 | 0.918 | ↑ | 0.652 | 71.0 | 128.0 |
| 24 | 0.212446 | 0.191 | 0.920 | ↑ | 0.626 | 68.0 | 123.0 |
| 25 | 0.221579 | 0.199 | 0.922 | ↑ | 0.601 | 65.2 | 118.4 |
| 26 | 0.230747 | 0.208 | 0.924 | ↑ | 0.578 | 62.6 | 114.1 |

As can be seen from Table **2** and FIG. **5,** the smaller the friction coefficient $\mu_o$ is, the lower the retention rate is. Further, the larger the wedge angle $\alpha$ is, the lower the retention rate is. This corresponds to the fact that the transmission power after oil adhesion becomes reduced as the wedge angle $\alpha$ is increased. In particular, when the wedge angle $\alpha$ is 21°, the retention rate is less than 80%. If consideration is given to an actual condition for use, it would be difficult to attain a stable transmittability by employing this angle. This also proves the adequacy of the upper limit setting of the wedge angle $\alpha$ at 20°.

- Relationship between wedge angle and force with which pulley pushes block -

During the period from the time part of the belt **5** comes into engagement with the pulleys **3, 4** to the time it goes out thereof, the belt **5** is pressed with a constant force **F** (herein, assumed to be **F**=100) against the pulley grooves **3c, 4c** inwardly along the pulley radius to fit in the pulley grooves **3c, 4c** with stability. In this state, the force **N** with which the pulley **3, 4** pushes the block **7** (the reaction force in the direction perpendicular to the contact surface between the pulley **3, 4** and the block **7**) is obtained by the following Equation (5):

$$N = F/2\sin(\alpha/2) \qquad\qquad (5)$$

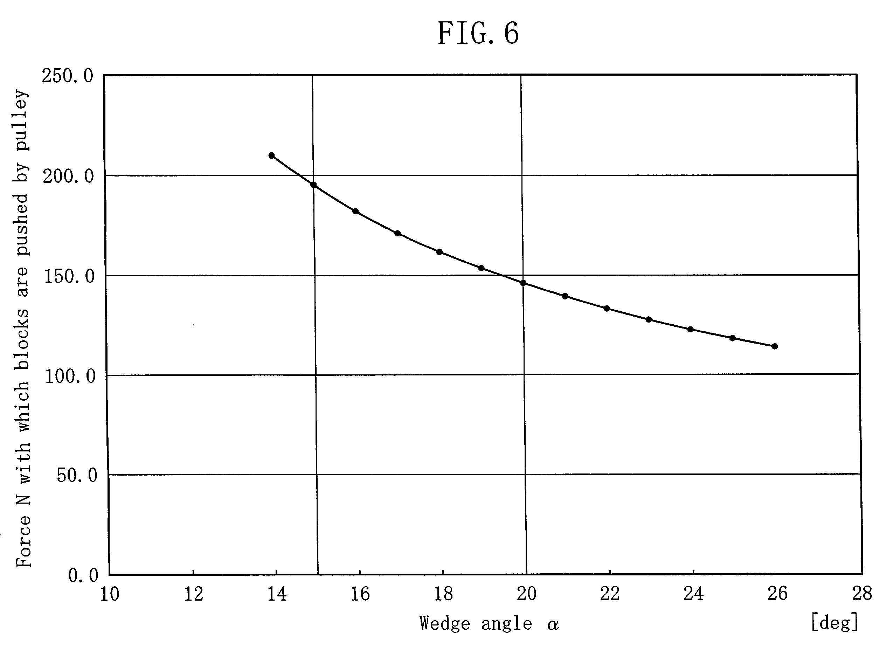

Therefore, the respective forces N when the wedge angles $\alpha$ range from 14° to 26° (in increments of 1°) are obtained as shown in Table **2**. Further, FIG. **6** illustrates the relationship between the wedge angle $\alpha$ and the force **N** with which the pulley pushes the block.

As can be seen from Table **2** and FIG. **6**, the smaller the wedge angle $\alpha$ is, the larger the force **N** with which the pulley **3, 4** pushes the block **7** is. However, the respective wedge angles $\alpha$ ranging from 26° to 15° provide forces **N** which satisfy **N**< 200, while the wedge angle $\alpha$ of 14° provides a force N which satisfies **N**>200. In other words, when $\alpha \leqq 14°$, an excessive force twice more than the force with which the belt **5** is pushed into the pulley grooves **3c, 4c** is applied to the respective contact surfaces **7a** of the blocks **7**. This also proves the adequacy of the lower limit setting of the wedge angle $\alpha$ at 15°.

According to this embodiment, the belt continuously variable transmission comprises a driving pulley **3** and a driven pulley **4** which have respective pulley grooves **3c, 4c** formed in V-section shape at a predetermined wedge angle $\alpha$ and of which the pulley diameters are variable, and a block-type belt **5** wound between the pulleys **3, 4**. Also, the block-type belt **5** includes a pair of tension members **6, 6** extending longitudinally of the belt, and a plurality of the blocks **7, 7**, ⋯ which are fixedly engaged with both the tension members **6, 6** to align longitudinally of the belt and each of which has both side surfaces widthwise of the belt serving as contact surfaces **7a, 7a** with the corresponding surfaces of the pulley groove **3c, 4c** of each pulley **3, 4**. In the belt continuously variable transmission of such construction, as is apparent from the above, the wedge angle $\alpha$ of the pulley grooves **3c, 4c** is set at $\alpha \leqq 20°$ so that the apparent friction coefficient $\mu'$ between each pulley **3, 4** and each block of the belt **5** is made high. This decreases the friction coefficient $\mu$ between the surfaces of each pulley groove **3c, 4c** and the contact surfaces **7a, 7a** of each block **7** without reducing a high transmission power. Accordingly, regardless of whether or not oil mist adheres to the surfaces of the pulley grooves **3, 4** or the contact surfaces **7a, 7a** of the blocks **7**, this transmission makes it possible to retain a high transmission power.

In this state, the wedge angle $\alpha$ further satisfies $\alpha \geqq 15°$, which avoids that the force **N** with which the surfaces of the pulley grooves **3c, 4c** push the contact surfaces **7a, 7a** becomes excessive due to too high an apparent friction coefficient $\mu'$. Therefore, the apparent friction coefficient $\mu'$ can be higher without reducing the durability of the block-type belt **5.**

Furthermore, the phenolic resin material **9** of which each block **7** of the block-type belt **5** is made contains glass fiber and the electroless plated nickel film containing the fluoroplastic particles in a dispersed state is formed on the surfaces of the pulley grooves **3c, 4c** of the driving and driven pulleys **3, 4**. Therefore, it is possible to make appropriate reduction in the friction coefficient $\mu$ between the surfaces of each pulley groove **3c, 4c** and the contact surfaces **7a, 7a** of each block **7**. Moreover, the friction coefficient $\mu$ can be easily adjusted according to the glass-fiber and fluoroplastic-particle contents.

**Claims**

**1.** A belt continuously variable transmission comprising:

    a pair of pulleys which each have a V-section pulley groove with a predetermined wedge angle and of which pulley diameters are variable; and

a heavy-duty power transmission V-belt which is wound between the pair of pulleys and which includes at least one pair of tension members disposed to extend longitudinally of the belt, and a plurality of blocks fixedly engaged with the tension members to align longitudinally of the belt and each having both side surfaces widthwise of the belt, the side surfaces of each said block serving as contact portions contactable with corresponding surfaces of the pulley groove of each said pulley,

wherein the wedge angle $\alpha$ of the pulley groove of each said pulley satisfies $\alpha \leqq 20°$.

2. The belt continuously variable transmission of Claim 1,
   wherein the wedge angle $\alpha$ of the pulley groove of each said pulley satisfies $\alpha \geqq 15°$.

3. The belt continuously variable transmission of Claim 1 or 2,
   wherein at least the contact portions of each said block which are contactable with the corresponding surfaces of the pulley groove are formed of a phenolic resin material, and
   the surfaces of the pulley groove of each said pulley are covered with an electrolessly plated nickel film.

4. The belt continuously variable transmission of Claim 3,
   wherein the phenolic resin material contains carbon fiber.

5. The belt continuously variable transmission of Claim 3,
   wherein the electrolessly plated nickel film contains fluoroplastic particles.

# FIG. 1

FIG. 2

FIG. 3

FIG. 4

FIG. 5

# FIG. 6

EP 1 304 501 A2